# FASCICULE DE BREVET EUROPEEN

(11) **EP 2 103 470 B1**
(45) Date de publication et mention de la délivrance du brevet: **30.11.2011**
(21) Numéro de dépôt: 09154177.1
(22) Date de dépôt: 03.03.2009
(51) Int. Cl.: B60J 1/02, B60R 13/04

(54) **Système de fixation d'un pare-brise et de vitres latérales aux montants d'un véhicule automobile et procédé de montage correspondant**
System zur Befestigung einer Windschutzscheibe und der seitlichen Scheiben an den Vertikalprofilen eines Kraftfahrzeugs und entsprechendes Montageverfahren
System for fixing a windscreen and side windows to the struts of an automobile and associated installation method

(30) Priorité: 21.03.2008 FR 0851852
(43) Date de publication de la demande: 23.09.2009
(73) Titulaire: PEUGEOT CITROËN AUTOMOBILES S.A., 78140 Vélizy Villacoublay (FR)
(72) Inventeur: Jaouen, Jean-Sébastien, 91380 Chilly Mazarin (FR); Burban, Eric, 75001 Paris (FR)
(74) Mandataire: Allain, Laurent

(56) Documents cités:
- FR-A- 2 444 581
- FR-A- 2 453 743
- FR-A- 2 883 225
- FR-A- 2 894 185
- FR-A- 2 899 521

## Description

La présente invention concerne un système de fixation d'un pare-brise et de deux vitres latérales aux montants délimitant la baie vitrée avant d'un véhicule automobile.

L'invention concerne également le procédé de montage d'un pare-brise sur la baie d'un véhicule automobile pour réaliser le système de fixation ci-dessus.

Dans un premier mode de fixation connu, chacun des deux bords latéraux du pare-brise est collé sur une première partie marginale d'un montant et un bord d'une vitre latérale étant collé sur une seconde partie marginale située à l'opposé de la première partie.

Dans ce mode de fixation, le montant fait saillie vers l'extérieur entre les bords adjacents du pare-brise et de la vitre latérale.

Dans ce mode de réalisation connu dans le cas d'un véhicule du type monospace, la largeur des montants est telle que ceux-ci occultent considérablement la visibilité du conducteur.

Dans un second mode de réalisation, le montant ne fait pas saillie vers l'extérieur entre les bords adjacents du pare-brise et de la vitre latérale, mais l'interstice compris entre les bords du pare-brise et de la vitre latérale est recouvert par un enjoliveur qui est fixé au montant par des agrafes.

Dans ce cas, les montants occultent moins la visibilité que dans le premier mode décrit précédemment.

Cependant, la présence des agrafes pour fixer l'enjoliveur empêche de réduire la largeur de l'interstice entre le pare-brise et la vitre latérale et la largeur du montant.

FR2899521 décrit le préambule de la revendication 1.

Dans un troisième mode de fixation décrit dans le FR-A-2883225, les montants sont constitués par un corps creux comportant une partie de section en U dans laquelle le bord du pare-brise est engagé, la vitre latérale étant collée sur une autre partie du corps creux.

Par ailleurs, l'interstice entre les bords adjacents du pare-brise et de la vitre latérale est recouvert par un enjoliveur.

Ce mode de fixation permet de réduire la largeur de l'interstice précité et celle des montants.

Cependant, de tels montants sont compliqués et coûteux à fabriquer.

Le but de la présente invention est de remédier aux inconvénients mentionnés ci-dessus et plus précisément d'apporter des améliorations au second mode de fixation décrit ci-dessus.

Ce but est atteint selon l'invention grâce à un système de fixation d'un pare-brise et de deux vitres latérales aux deux montants délimitant la baie vitrée avant d'un véhicule automobile, chacun des deux bords latéraux du pare-brise étant collé sur une première partie marginale d'un montant et un bord d'une vitre latérale étant collé sur une seconde partie marginale située à l'opposé de la première partie et un enjoliveur recouvrant extérieurement l'interstice compris entre le pare-brise et la vitre latérale ainsi que la partie du montant qui est située en regard de l'interstice, caractérisé en ce que l'enjoliveur est libre par rapport au montant et comporte une première partie qui recouvre extérieurement le bord latéral adjacent du pare-brise et est fixé à celui-ci, une seconde partie de l'enjoliveur prenant appui extérieurement sur le bord adjacent de la vitre latérale.

Ce mode de fixation n'utilise pas d'agrafes ou d'autres moyens pour fixer l'enjoliveur au montant, ce qui permet de réduire l'interstice entre le pare-brise et la vitre latérale et par conséquent de réduire la largeur du montant, ce qui permet d'augmenter la visibilité.

De plus, l'invention permet d'utiliser des montants de structure classique, donc peu onéreuse.

De préférence, ladite première partie de l'enjoliveur est collée sur le bord latéral du pare-brise. On peut aussi imaginer cette partie de l'enjoliveur encapsulé (directement moulé) sur le bord latéral du pare brise.

Cette opération peut être réalisée par le fabricant du pare-brise, ce qui permet de simplifier le montage de celui-ci sur le véhicule.

De préférence également, ladite première partie de l'enjoliveur comporte une lèvre faisant saillie vers l'intérieur et s'appuyant sur le chant adjacent du bord latéral du pare-brise.

Cette disposition permet de définir avec précision la position de l'enjoliveur sur le bord du pare-brise.

Selon une version préférée de l'invention, la partie de l'enjoliveur qui est située entre ladite lèvre et l'extrémité de cet enjoliveur qui s'appuie sur la vitre latérale est une partie souple.

Cette partie souple permet à l'extrémité de l'enjoliveur de s'appuyer élastiquement sur la vitre latérale.

De préférence, ladite seconde partie de l'enjoliveur est collée sur le bord de la vitre latérale.

Avantageusement, ladite seconde partie se termine par un rebord courbé vers la vitre latérale, dont l'extrémité s'appuie sur cette dernière.

Selon d'autres particularités et avantages de l'invention :
- le collage de la seconde partie de l'enjoliveur sur le bord de la vitre latérale s'étend dans une zone comprise entre le rebord courbé et une nervure en saillie sur la face intérieure de l'enjoliveur ;
- la première partie de l'enjoliveur présente une extrémité en contact direct avec le pare-brise et une zone située entre cette extrémité et ladite lèvre qui est collée sur le pare-brise ;
- chacun des deux montants est creux et est constitué par deux tôles embouties soudées l'une à l'autre, la première tôle adjacente au pare-brise et à la vitre latérale présentant une courbure légèrement convexe vers le pare-brise et la vitre latérale, tandis que la seconde tôle présente une courbure plus prononcée dirigée vers l'habitacle du véhicule.

Selon un autre aspect de l'invention, le procédé de montage d'un pare-brise sur la baie d'un véhicule automobile pour réaliser le système de fixation selon l'invention est caractérisé en ce que l'on utilise un pare-brise dont les bords latéraux sont prééquipés en usine par ledit enjoliveur, on applique un cordon de colle sur le pare brise en périphérie dans les zones recouvrant les montants latéraux, sur le bord avant du pavillon et sur le bord inférieur de la baie, on applique la périphérie intérieure du pare-brise ainsi équipé dudit cordon de colle, sur la baie de pare brise du véhicule, de façon que l'extrémité de la seconde partie de l'enjoliveur prenne appui sur le bord adjacent de la vitre latérale, on applique une pression sur le pare-brise pour écraser le cordon de colle et on colle ensuite la seconde partie de l'enjoliveur sur la vitre latérale.

Ce procédé est de mise en oeuvre simple et rapide, donc économique, notamment du fait que l'enjoliveur est déjà fixé sur les bords du pare-brise et qu'il ne nécessite pas de moyens de fixation tels que des agrafes.

De préférence, la surface intérieure de la seconde partie de l'enjoliveur est préalablement pourvue d'une couche adhésive protégée extérieurement par un film et après application du pare-brise sur la baie, l'opérateur soulève la seconde partie de l'enjoliveur, décolle le film de protection de la couche adhésive et presse la seconde partie de l'enjoliveur contre la vitre latérale.

Cette opération permet d'obtenir une étanchéité parfaite entre l'enjoliveur et la vitre latérale.

Le procédé selon l'invention est compatible avec une opération dans laquelle des rouleaux permettent de centrer le pare-brise par rapport à la baie du véhicule en s'appuyant latéralement contre la seconde partie souple de l'enjoliveur.

D'autres particularités et avantages de l'invention apparaîtront encore tout au long de la description ci-après.

Aux dessins annexés, donnés à titre d'exemples, non limitatifs :
- la figure 1 est une vue schématique en perspective montrant l'avant d'un véhicule automobile,
- la figure 2 est une vue en coupe transversale d'un pare-brise, d'une vitre latérale, d'un montant et d'un enjoliveur reliés ensemble par un système de fixation selon l'invention,
- la figure 3 est une vue en coupe transversale partielle d'un pare-brise prééquipé de l'enjoliveur,
- la figure 4 montre un rouleau agissant sur l'enjoliveur porté par le pare-brise lors de la pose de celui-ci.

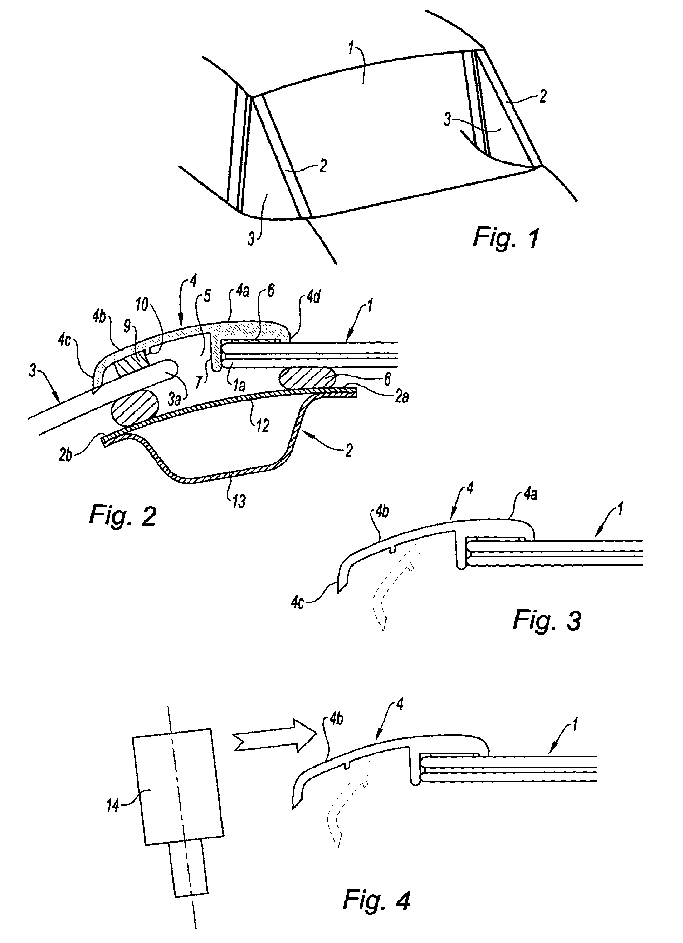

La figure 1 montre l'environnement de la baie vitrée avant d'un véhicule automobile du type monospace qui comprend un pare-brise 1 situé entre deux montants 2, et deux petites vitres latérales fixes 3 appelées fenestrons fixées chacune à un montant 2.

Le système de fixation selon l'invention est représenté en coupe transversale sur la figure 2.

On voit sur cette figure que chacun des deux bords latéraux 1 a du pare-brise 1 est collé au moyen d'un cordon de colle 6 sur une première partie marginale 2a d'un montant 2 et un bord 3a d'une vitre latérale 3 est collé sur une seconde partie marginale 2b du montant située à l'opposé de la première partie 2a.

De plus, un enjoliveur 4 recouvre extérieurement l'interstice 5 compris entre le pare-brise 1 et la vitre latérale 3, ainsi que la partie du montant 2 qui est située en regard de l'interstice 5.

Conformément à l'invention l'enjoliveur 4 est libre de tout contact par rapport au montant 2 et comporte une première partie 4a qui recouvre extérieurement le bord latéral 1 a adjacent du pare-brise 1 et est fixé à celui-ci.

Une seconde partie 4b de l'enjoliveur 4 prend appui extérieurement sur le bord adjacent 3a de la vitre latérale 3.

La première partie 4a de l'enjoliveur 4 est collée sur le bord latéral 1a du pare-brise 1 par une couche de colle 6a, mais on peut aussi envisager une encapsulation de cette partie, c'est-à-dire moulée directement sur le bord latéral 1 a du pare-brise 1.

Par ailleurs, la première partie 4a de l'enjoliveur 4 comporte une lèvre 7 faisant saillie vers l'intérieur et s'appuyant sur le chant adjacent du bord latéral 1a du pare-brise 1.

La partie de l'enjoliveur 4 qui est située entre la lèvre 7 et l'extrémité 4c de cet enjoliveur 4 qui s'appuie sur la vitre latérale 3 est une partie souple, c'est-à-dire qui est élastique.

Cette seconde partie 4b de l'enjoliveur 4 est collée sur le bord 3a de la vitre latérale 3, au moyen d'une couche adhésive 9.

Dans l'exemple représenté sur la figure 2, la seconde partie 4b de l'enjoliveur 4 se termine par un rebord 4c courbé vers la vitre latérale 3, dont l'extrémité s'appuie élastiquement sur cette dernière.

On voit en outre sur la figure 2 que le collage, c'est-à-dire la couche adhésive 9 de la seconde partie 4b de l'enjoliveur 4 sur le bord 3a de la vitre latérale 3 s'étend dans une zone comprise entre le rebord courbé 4c et une nervure 10 en saillie sur la face intérieure de l'enjoliveur 4.

La figure 2 montre de plus que la première partie 4a de l'enjoliveur 4 présente une extrémité 4d en contact direct avec le pare-brise 1 et une zone située entre cette extrémité 4b et la lèvre 7 qui est collée sur le pare-brise 1 au moyen d'une couche de colle 6a.

Dans l'exemple représenté, chacun des deux montants 2 est creux et est constitué par deux tôles embouties 12, 13 soudées l'une à l'autre.

La première tôle 12 adjacente au pare-brise 1 et à la vitre latérale 3 présente une courbure légèrement convexe vers le pare-brise 1 et la vitre latérale 3, tandis que la seconde tôle 13 présente une courbure plus prononcée dirigée vers l'habitacle du véhicule.

La figure 2 montre que la largeur de l'interstice 5 compris entre les bords adjacents 1 a et 3a du pare-brise et de la vitre latérale est très réduite.

Cet interstice 5 pourrait être réduit à l'épaisseur de la lèvre 7 de l'enjoliveur 4.

En conséquence, la largeur du montant 3 peut être réduite, ce qui permet d'augmenter la visibilité du conducteur vers l'avant.

La figure 3 montre le pare-brise 1 prééquipé de l'enjoliveur 4 par le fabricant, c'est-à-dire le verrier.

Au repos, la partie souple 4b de l'enjoliveur 4 a la position rabattue représentée en pointillés sur la figure 3.

La position en trait plein représente la position de la partie souple 4b lorsque le pare-brise est monté sur la baie et que l'extrémité 4a de la partie 4c prend appui élastiquement sur la vitre latérale 3.

Le procédé de montage du pare-brise 1 représenté sur la figure 3 comprend les étapes suivantes.

On applique de façon connue un cordon de colle sur le pare brise en périphérie dans les zones recouvrant les montants latéraux 2 sur le bord avant du pavillon et sur le bord inférieur de la baie.

On applique ensuite la périphérie intérieure du pare-brise 1 ainsi équipé dudit cordon de colle, sur la baie de pare brise du véhicule, de façon que l'extrémité 4c de la seconde partie 4b de l'enjoliveur 4 prenne appui sur le bord adjacent 3a de la vitre latérale 3 et on applique une pression sur le pare-brise 1 pour écraser le cordon de colle.

Dans une dernière étape, on colle la seconde partie 4b de l'enjoliveur 4 sur la vitre latérale 3.

Pour réaliser cette étape de collage, la surface intérieure de la seconde partie 4b de l'enjoliveur 4 est préalablement pourvue d'une couche adhésive 9 (voir figure 2) protégée extérieurement par un film.

Après application du pare-brise 1 sur la baie, l'opérateur soulève la seconde partie 4b de l'enjoliveur 4, décolle le film de protection de la couche adhésive 9 et presse la seconde partie 4b de l'enjoliveur contre la vitre latérale 3.

Lors de la pose des pare-brises dans une ligne de fabrication, on utilise généralement des robots.

Une étape préalable à l'utilisation du robot, consiste à centrer le pare brise à l'aide d'un outil équipé de rouleaux tels que le rouleau 14 représenté sur la figure 4 qui permettent de centrer le pare-brise 1 à une position conforme pour le robot et donc indirectement par rapport à la baie du véhicule.

Lors de cette opération, chaque rouleau 14 prend appui sur la seconde partie 4b de l'enjoliveur 4.

Cet appui latéral des rouleaux 14 est favorisé du fait que la seconde partie 4b de l'enjoliveur 4 est rabattue vers le bas (voir position en pointillés sur la figure 4).

Les principaux avantages de l'invention que l'on vient de décrire sont les suivants :
- l'invention permet de réduire le volume des montants 2 tout en utilisant pour ceux-ci une structure classique,
- la pose du pare-brise 1 est facile du fait que celui-ci est prééquipé en usine d'enjoliveurs latéraux 4,
- la présence des enjoliveurs 4 est compatible avec le procédé de centrage utilisant des rouleaux 14,
- la visibilité vers l'avant, notamment de trois quart est améliorée.

## Revendications

1. Système de fixation d'un pare-brise (1) et de deux vitres latérales (3) aux deux montants (2) délimitant la baie vitrée avant d'un véhicule automobile, chacun des deux bords latéraux du pare-brise (1) étant collé sur une première partie marginale (2a) d'un montant (2) et un bord d'une vitre latérale (3) étant collé sur une seconde partie marginale (2b) située à l'opposé de la première partie (2a) et un enjoliveur (4) recouvrant extérieurement l'interstice (5) compris entre le pare-brise (1) et la vitre latérale (3) ainsi que la partie du montant (2) qui est située en regard de l'interstice (5), **caractérisé en ce que** l'enjoliveur (4) est libre par rapport au montant (2) et comporte une première partie (4a) qui recouvre extérieurement le bord latéral adjacent du pare-brise (1) et est fixé à celui-ci, une seconde partie (4b) de l'enjoliveur (4) prenant appui extérieurement sur le bord adjacent de la vitre latérale (3).

2. Système de fixation selon la revendication 1, **caractérisé en ce que** ladite première partie (4a) de l'enjoliveur est collée sur le bord latéral du pare-brise (1).

3. Système de fixation selon la revendication 1, **caractérisé en ce que** ladite première partie (4a) de l'enjoliveur est encapsulée, c'est-à-dire moulée directement, sur le bord latéral du pare-brise (1).

4. Système de fixation selon l'une des revendications 1 ou 2, **caractérisé en ce que** ladite première partie (4a) de l'enjoliveur (4) comporte une lèvre (7) faisant saillie vers l'intérieur et s'appuyant sur le chant adjacent du bord latéral (1 a) du pare-brise (1).

5. Système de fixation selon la revendication 3, **caractérisé en ce que** la partie de l'enjoliveur (4) qui est située entre ladite lèvre (7) et l'extrémité (4c) de cet enjoliveur qui s'appuie sur la vitre latérale (3) est une partie souple.

6. Système de fixation selon l'une des revendications 1 à 4, **caractérisé en ce que** ladite seconde partie (4b) de l'enjoliveur (4) est collée sur le bord (3a) de la vitre latérale (3).

7. Système de fixation selon l'une des revendications 1 à 5, **caractérisé en ce que** ladite seconde partie (4b) se termine par un rebord courbé (4c) vers la vitre latérale (3), dont l'extrémité s'appuie sur cette dernière.

8. Système de fixation selon les revendications 5 et 6, **caractérisé en ce que** le collage de la seconde partie (4b) de l'enjoliveur (4) sur le bord de la vitre latérale (3) s'étend dans une zone comprise entre le rebord courbé (4c) et une nervure (10) en saillie sur la face intérieure de l'enjoliveur (4).

9. Système de fixation selon l'une des revendications 3 à 7, **caractérisé en ce que** la première partie (4a) de l'enjoliveur (4) présente une extrémité (4d) en contact direct avec le pare-brise (1) et une zone située entre cette extrémité (4b) et ladite lèvre (7) qui est collée sur le pare-brise.

10. Système de fixation selon l'une des revendications 1 à 8, **caractérisé en ce que** chacun des deux montants (2) est creux et est constitué par deux tôles embouties (12, 13) soudées l'une à l'autre, la première tôle (12) adjacente au pare-brise (1) et à la vitre latérale (3) présentant une courbure légèrement convexe vers le pare-brise et la vitre latérale, tandis que la seconde tôle (13) présente une courbure plus prononcée dirigée vers l'habitacle du véhicule.

11. Procédé de montage d'un pare-brise (1) sur la baie vitrée d'un véhicule automobile pour réaliser le système de fixation selon l'une des revendications 1 à 9, **caractérisé en ce que** l'on utilise un pare-brise (1) dont les bords latéraux sont prééquipés en usine par ledit enjoliveur (4), on applique un cordon de colle sur le pare brise en périphérie dans les zones recouvrant les montants latéraux (2) et le bord avant du pavillon et sur le bord inférieur de la baie, on applique la périphérie intérieure du pare-brise (1) ainsi équipé dudit cordon de colle, sur la baie de pare brise du véhicule, de façon que l'extrémité (4c) de la seconde partie (4b) de l'enjoliveur (4) prenne appui sur le bord adjacent de la vitre latérale (3), on applique une pression sur le pare-brise (1) pour écraser le cordon de colle et on colle ensuite la seconde partie (4b) de l'enjoliveur sur la vitre latérale (3).

12. Procédé selon la revendication 11, dans lequel la surface intérieure de la seconde partie (4b) de l'enjoliveur (4) est préalablement pourvue d'une couche adhésive (9) protégée extérieurement par un film et dans lequel après application du pare-brise (1) sur la baie, l'opérateur soulève la seconde partie (4b) de l'enjoliveur (4), décolle le film de protection de la couche adhésive (9) et presse la seconde partie (4b) de l'enjoliveur (4) contre la vitre latérale (3).

13. Procédé selon l'une des revendications 11 ou 12, dans lequel des rouleaux (14) permettant de centrer le pare-brise (1) par rapport à la baie prennent appui latéralement contre la seconde partie (4b) de l'enjoliveur (4).

## Claims

1. System for fixing a windscreen (1) and two side windows (3) to two struts (2) defining the front window opening of a motor vehicle, each of the two side rims of the windscreen (1) being bonded to a first marginal portion (2a) of a strut (2) and a rim of a side window (3) being bonded to a second marginal portion (2b) situated opposite the first portion (2a) and a moulding (4) externally covering the gap (5) between the windscreen (1) and the side window (3) as well as the portion of the strut (2) situated opposite the gap (5), **characterised in that** the moulding (4) is free in relation to the strut (2) and comprises a first portion (4a) which externally covers the adjacent side rim of the windscreen (1) and is fixed thereto, a second portion (4b) of the moulding (4) resting externally against the adjacent rim of the side window (3).

2. Fixing system according to claim 1, **characterised in that** said first portion (4a) of the moulding is bonded to the side rim of the windscreen (1).

3. Fixing system according to claim 1, **characterised in that** said first portion (4a) of the moulding is encapsulated, that is to say moulded directly, on the side rim of the windscreen (1).

4. Fixing system according to either claim 1 or claim 2, **characterised in that** said first portion (4a) of the moulding (4) comprises a lip (7) projecting inwardly and resting against the adjacent edge of the side rim (1 a) of the windscreen (1).

5. Fixing system according to claim 3, **characterised in that** the portion of the moulding (4) which is situated between said lip (7) and the end (4c) of said moulding which rests against the side window (3) is a flexible portion.

6. Fixing system according to any one of claims 1 to 4, **characterised in that** said second portion (4b) of the moulding (4) is bonded to the rim (3a) of the side window (3).

7. Fixing system according to any one of claims 1 to 5, **characterised in that** said second portion (4b) ends in a flange (4c) which is curved towards the side window (3), the end of which flange rests against said side window.

8. Fixing system according to claims 5 and 6, **characterised in that** the bonding of the second portion (4b) of the moulding (4) to the rim of the side window (3) extends into a region between the curved flange (4c) and a rib (10) projecting from the inner face of the moulding (4).

9. Fixing system according to any one of claims 3 to 7, **characterised in that** the first portion (4a) of the moulding (4) has an end (4d) in direct contact with the windscreen (1) and a region situated between said end (4b) and said lip (7) which is bonded to the windscreen.

10. Fixing system according to any one of claims 1 to 8, **characterised in that** each of the two struts (2) is hollow and is formed by two stamped plates (12, 13) which are welded to one another, the first plate (12) adjacent to the windscreen (1) and to the side window (3) having a slightly convex curvature towards the windscreen and the side window, while the second plate (13) has a more pronounced curvature towards the passenger compartment of the vehicle.

11. Method for installing a windscreen (1) on the window opening of a motor vehicle for implementing the fixing system according to any one of claims 1 to 9, **characterised in that** a windscreen (1) having side rims which are pre-equipped with said moulding (4) during production is used, a bead of adhesive is applied to the periphery of the windscreen in the regions covering the side struts (2) and the front rim of the roof and to the lower rim of the opening, the inner periphery of the windscreen (1) thus equipped with said bead of adhesive is applied to the windscreen opening of the vehicle such that the end (4c) of the second portion (4b) of the moulding (4) rests against the adjacent rim of the side window (3), pressure is applied to the windscreen (1) so as to flatten the bead of adhesive and the second portion (4b) of the moulding is then bonded to the side window (3).

12. Method according to claim 11, wherein the inner surface of the second portion (4b) of the moulding (4) is provided beforehand with an adhesive layer (9) protected externally by a film and wherein, after application of the windscreen (1) to the opening, the operator raises the second portion (4b) of the moulding (4), removes the protective film from the adhesive layer (9) and presses the second portion (4b) of the moulding against the side window (3).

13. Method according to either claim 11 or claim 12, wherein rollers (14) which make it possible to centre the windscreen (1) with respect to the opening rest laterally against the second portion (4b) of the moulding (4).

## Patentansprüche

1. System zur Befestigung von einer Windschutzscheibe (1) und von zwei Seitenscheiben (3) an den zwei Holmen (2) zur Begrenzung der vorderen Fensteröffnung eines Kraftfahrzeugs, wobei jeder der seitlichen Ränder der Windschutzscheibe (1) auf einem ersten Randteil (2a) eines Holms (2) aufgeklebt ist und ein Rand einer Seitenscheibe (3) auf einem zweiten Randteil (2b) aufgeklebt ist, der dem ersten Teil (2a) entgegengesetzt ist, und eine Zierblende (4) den Zwischenraum (5) zwischen der Windschutzscheibe (1) und der Seitenscheibe (3) sowie den Teil des Holms (2), der dem Zwischenraum (5) gegenüber angeordnet ist, an der Außenseite überdeckt, **dadurch gekennzeichnet, dass** die Zierblende (4) relativ zu dem Holm (2) frei ist und einen ersten Teil (4a) aufweist, der den seitlichen Rand, der an die Windschutzscheibe (1) angrenzt, an der Außenseite überdeckt und an diesem befestigt ist, wobei ein zweiter Teil (4b) der Zierblende (4) auf dem Rand, der an die Seitenscheibe (3) angrenzt, an der Außenseite zur Abstützung kommt.

2. Befestigungssystem nach Anspruch 1, **dadurch gekennzeichnet, dass** der erste Teil (4a) der Zierblende auf dem seitlichen Rand der Windschutzscheibe (1) aufgeklebt ist.

3. Befestigungssystem nach Anspruch 1, **dadurch gekennzeichnet, dass** der erste Teil (4a) der Zierblende auf dem seitlichen Rand der Windschutzscheibe (1) eingekapselt, d. h. direkt eingeformt ist.

4. Befestigungssystem nach einem der Ansprüche 1 oder 2, **dadurch gekennzeichnet, dass** der erste Teil (4a) der Zierblende (4) eine Lippe (7) aufweist, die in Richtung der Innenseite vorspringt und sich auf der Kante, die an den Seitenrand (1 a) der Windschutzscheibe (1) angrenzt, abstützt.

5. Befestigungssystem nach Anspruch 3, **dadurch gekennzeichnet, dass** der Teil der Zierblende (4), der zwischen der Lippe (7) und dem Ende (4c) der Zierblende, die sich auf der Seitenscheibe (3) abstützt, angeordnet ist, ein biegsamer Teil ist.

6. Befestigungssystem nach einem der Ansprüche 1 bis 4, **dadurch gekennzeichnet, dass** der zweite Teil (4b) der Zierblende (4) auf dem Rand (3a) der Seitenscheibe (3) aufgeklebt ist.

7. Befestigungssystem nach einem der Ansprüche 1 bis 5, **dadurch gekennzeichnet, dass** der zweite Teil (4b) in einem Bund (4c) endet, der in Richtung der Seitenscheibe (3) gekrümmt ist, dessen Ende sich auf dieser Letzten abstützt.

8. Befestigungssystem nach den Ansprüchen 5 und 6, **dadurch gekennzeichnet, dass** sich die Verklebung des zweiten Teils (4b) der Zierblende (4) auf dem Rand der Seitenscheibe (3) in einen Bereich zwischen dem gekrümmten Bund (4c) und einer Rippe (10) erstreckt, die über die Innenseite der Zierblende (4) übersteht.

9. Befestigungssystem nach einem der Ansprüche 3 bis 7, **dadurch gekennzeichnet, dass** der erste Teil (4c) der Zierblende (4) ein Ende (4d), das in direktem Kontakt mit der Windschutzscheibe (1) ist, und einen Bereich, der zwischen diesem Ende (4b) und der Lippe (7), die auf der Windschutzscheibe aufgeklebt ist, angeordnet ist, aufweist.

10. Befestigungssystem nach einem der Ansprüche 1 bis 8, **dadurch gekennzeichnet, dass** jeder der zwei Holme (2) hohl ist und von zwei tiefgezogenen Blechen (12, 13) gebildet ist, die miteinander verschweißt sind, wobei das erste Blech (12), das an die Windschutzscheibe (1) und an die Seitenscheibe (3) angrenzt, eine leicht konvexe Krümmung in Richtung der Windschutzscheibe und der Seitenscheibe aufweist, während das zweite Blech (13) eine ausgeprägtere Krümmung aufweist, die in Richtung der Fahrgastzelle des Fahrzeugs gerichtet ist.

11. Verfahren zur Montage einer Windschutzscheibe (1) in der Fensteröffnung eines Kraftfahrzeugs zur Realisierung des Befestigungssystems nach einem der Ansprüche 1 bis 9, **dadurch gekennzeichnet, dass**
eine Windschutzscheibe (1) verwendet wird, deren seitliche Ränder im Werk vorab mit der Zierblende (4) versehen werden,
eine Klebstoffraupe auf der Windschutzscheibe umlaufend in den Bereichen, welche die seitlichen Holme (2) und den vorderen Rand des Dachs überdecken, und auf dem unteren Rand der Öffnung aufgebracht wird,
der innere Umfang der auf diese Weise mit der Klebstoffraupe versehenen Windschutzscheibe (1) auf der Öffnung der Windschutzscheibe des Fahrzeugs aufgebracht wird, derart, dass das Ende (4c) des zweiten Teils (4b) der Zierblende (4) auf dem Rand, der an die Seitenscheibe (3) angrenzt, zur Abstützung kommt,
ein Druck auf die Windschutzscheibe (1) aufgebracht wird, um die Klebstoffraupe zu quetschen, und
dann der zweite Teil (4b) der Zierblende auf der Seitenscheibe (3) aufgeklebt wird.

12. Verfahren nach Anspruch 11, wobei die innere Fläche des zweiten Teils (4b) der Zierblende (4) vorab mit einer Klebeschicht (9) versehen wird, die an der Außenseite durch eine Folie geschützt ist, und wobei der Bediener nach dem Aufbringen der Windschutzscheibe (1) in der Öffnung den zweiten Teil (4b) der Zierblende (4) anhebt, die Schutzfolie von der Klebeschicht (9) abzieht und den zweiten Teil (4b) der Zierblende (4) gegen die Seitenscheibe (3) presst.

13. Verfahren nach einem der Ansprüche 11 oder 12, wobei Walzen (14) für die Zentrierung der Windschutzscheibe (1) relativ zu der Öffnung seitlich gegen den zweiten Teil (4b) der Zierblende (4) zur Abstützung kommen.
